Europäisches Patentamt

European Patent Office

Office européen des brevets

(19)

(11) Veröffentlichungsnummer: **0 388 634**

**A1**

## (12) EUROPÄISCHE PATENTANMELDUNG

(21) Anmeldenummer: **90102932.2**

(22) Anmeldetag: **15.02.90**

(51) Int. Cl.⁵: **B60T 8/48, B60T 8/42, B60T 8/40**

(30) Priorität: **21.03.89 DE 3909167**

(43) Veröffentlichungstag der Anmeldung:
**26.09.90 Patentblatt 90/39**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Rittmannsberger, Norbert, Dr.**
**Dipl.-Ing.**
**Seestrasse 104**
**D-7000 Stuttgart 1(DE)**
Erfinder: **Schmitt, Manfred, Dipl.-Ing.**
**Breslauerstrasse 23**
**D-7141 Schwieberdingen(DE)**

(54) **Vorrichtung für Blockierschutz und Antriebsschlupfbegrenzung.**

(57) Die Vorrichtung (22) hat einen Hauptbremszylinder (26) mit einem Druckmittelvorratsbehälter (24) sowie wenigstens eine Drucksteuerventilanordnung (38), welche einer Radbremse (18) zugeordnet ist. Außerdem ist eine Pumpe (52) vorgesehen, die im Blockierschutzbetrieb mittels der Drucksteuerventilanordnung (38) aus der Radbremse (18) entnommenes Druckmittel zum Hauptbremszylinder (26) fördert. Im Antriebsschlupfbegrenzungsbetrieb entnimmt die Pumpe (52) Druckmittel aus dem Hauptbremszylinder (26) und drückt es zur Radbremse (18). Hierzu hat die Drucksteuerventilanordnung (38) einen ersten mit dem Hauptbremszylinder (26) verbundenen Anschluß (42), einen zweiten mit der Radbremse (18) verbundenen Anschluß (44) und einen dritten Anschluß (46), durch den im Blockierschutzbetrieb zur Radbremsdruckabsenkung Druckmittelmengen ausströmen.

Ein einfacher Aufbau sowie eine erhöhte Funktionssicherheit der Vorrichtung (22) wird dadurch erreicht, daß im Antriebsschlupfbegrenzungsbetrieb der dritte Anschluß (46) der Drucksteuerventilanordnung (38) mit einem Druckausgang (60) der Pumpe (52) verbunden ist.

Die Vorrichtung (22) ist bei Kraftfahrzeugen anwendbar.

FIG.1

## Vorrichtung für Blockierschutz und Antriebsschlupfbegrenzung

Stand der Technik

Die Erfindung geht aus von einer Vorrichtung zur Vermeidung des Radblockierens beim Bremsen und zur Begrenzung von Antriebsschlupf an den antreibbaren Rädern eines Fahrzeugs nach der Gattung des Hauptanspruchs. Es ist schon eine derartige Vorrichtung bekannt (DE-OS 32 15 739). Diese Vorrichtung hat zur Begrenzung von Antriebsschlupf ein elektrisch gesteuertes 3/2-Wegeventil in der Hauptbremsleitung, welches im Antriebsschlupfbegrenzungsbetrieb einen Druckspeicher anstelle eines Hauptbremszylinders mit wenigstens einer Radbremse verbindet. Der Druck des im Speicher enthaltenen Druckmittels kann somit auf die mittels einer Drucksteuerventilanordnung angesteuerte Radbremse wirken. Bei unzureichendem, mittels eines Druckschalters erfaßtem Druck im Speicher wird die eine Förderrichtung aufweisende Pumpe eingeschaltet. Diese entnimmt über ein druckgesteuertes Umschaltventil Druckmittel aus dem Druckmittelvorratsbehälter des Hauptbremszylinders und fördert das Druckmittel zum Druckspeicher. Außerdem ist ein parallel zum 3/2-Wegeventil geschaltetes, eine Druckbegrenzungsfeder aufweisendes Rückschlagventil für den Schutz der Radbremse, der Drucksteuerventilanordnung, des 3/2-Wegeventils und der Pumpe vor Überlastung angeordnet. Die bekannte Vorrichtung ist nicht nur relativ aufwendig gestaltet, sie hat auch aufgrund der Hintereinanderschaltung von Ventilen zwischen dem Hauptbremszylinder und den Radbremsen eine eingeschränkte Funktionssicherheit.

Vorteile der Erfindung

Die erfindungsgemäße Vorrichtung mit den kennzeichnenden Merkmalen des Hauptanspruchs hat demgegenüber den Vorteil, einen einfachen Aufbau aufzuweisen, weil für den Antriebsschlupfbegrenzungsbetrieb lediglich Maßnahmen zum Wirksamwerden des Pumpendrucks am dritten Anschluß der Drucksteuerventilanordnung zu treffen sind. Eine erhöhte Funktionssicherheit im Bremsbetrieb wird erreicht, weil sich zwischen einer Radbremse und dem Hauptbremszylinder nur die Drucksteuerventilanordnung befindet.

Durch die in den Unteransprüchen aufgeführten Maßnahmen sind vorteilhafte Weiterbildungen und Verbesserungen der im Hauptanspruch angegebenen Vorrichtung möglich.

Die Maßnahme nach Unteranspruch 2 ist insofern vorteilhaft, als die zur Antriebsschlupfbegrenzung notwendige Funktion der Vorrichtung allein durch die Verwendung einer zwei Förderrichtungen aufweisenden Pumpe gelöst werden kann. Dabei kommt man mit den für den Blockierschutzbetrieb notwendigen Drucksteuerventilanordnungen aus. Die Kosten zum Erzielen der erweiterten Pumpenfunktion sind gering.

Zweckmäßigerweise verwendet man eine Pumpe der im Anspruch 3 gekennzeichneten Art.

Vorteilhaft ist auch die im Anspruch 4 angegebene Ausgestaltung der Vorrichtung, weil hierdurch eine lediglich in einer Drehrichtung anzutreibende Pumpe Verwendung finden kann.

Die im Anspruch 5 angegebene Ausgestaltung der Vorrichtung hat den Vorteil, daß durch Verwendung einer nur in einer Richtung fördernden und deshalb einfach ausbildbaren Pumpe mit geringem Aufwand an Ventilen die für beide Betriebszustände der Vorrichtung erforderliche Umschaltung von Druckmittelströmungswegen erzielbar ist.

Zweckmäßigerweise finden dabei Ventilanordnungen Anwendung, wie sie in den Ansprüchen 6 und 7 gekennzeichnet sind.

Bei der gattungsgemäßen Vorrichtung kann für den schnellen Druckabbau an wenigstens einer Radbremse je ein parallel zur Drucksteuerventilanordnung geschaltetes Rückschlagventil mit Sperrwirkung vom Hauptbremszylinder zur Radbremse angeordnet sein. Um die Funktion dieser Rückschlagventile auch bei einer Vorrichtung mit einer Pumpe, welche nur in einer Richtung fördert, und einer Umschaltventilanordnung mit geringem Aufwand sicherzustellen, ist die im Anspruch 8 angegebene Maßnahme getroffen.

Demgegenüber vereinfacht die Weiterbildung der Erfindung nach Anspruch 9 den Ventilaufwand und erhöht somit die Funktionssicherheit der Vorrichtung.

Durch die Maßnahme nach Anspruch 10 werden die Pumpe und die Ventile der Vorrichtung vor Drucküberlastung geschützt.

Eine kostengünstige Ausgestaltung für die Umschaltventilanordnung ist im Anspruch 11 angegeben.

Es ist ferner vorteilhaft, wenn die Maßnahme nach Anspruch 12 getroffen wird, da diese den Aufwand der Vorrichtung mindert und deren Funktionssicherheit erhöht.

Zeichnung

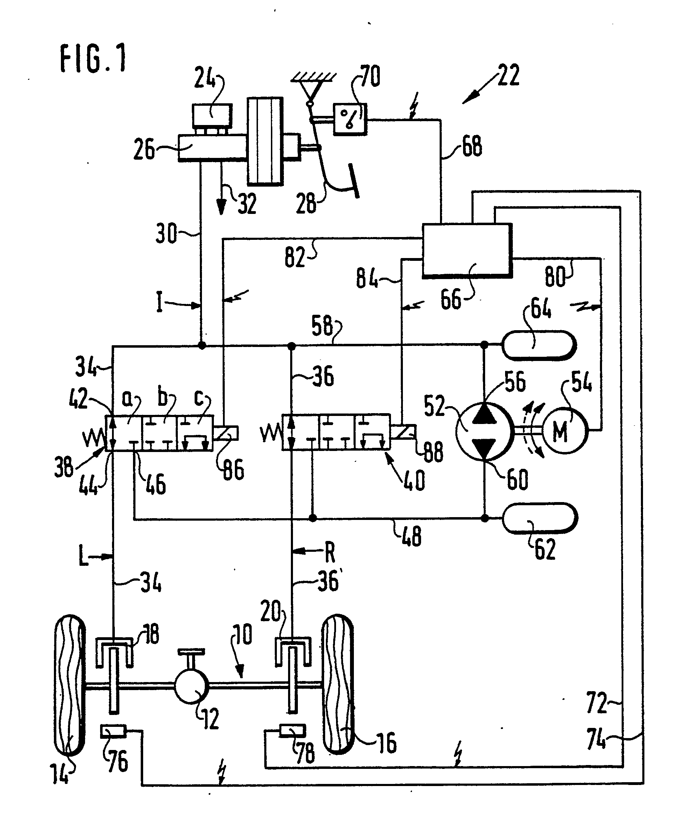

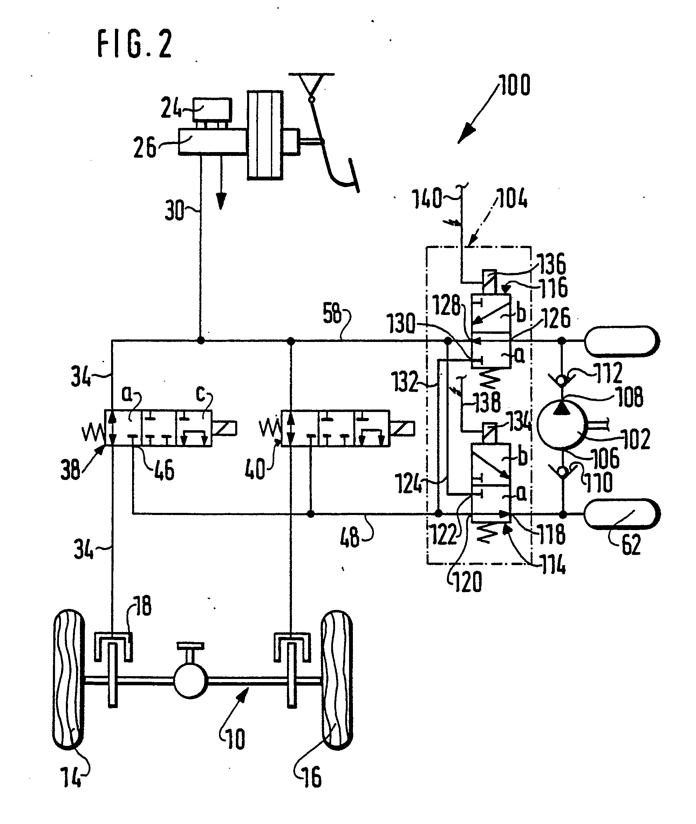

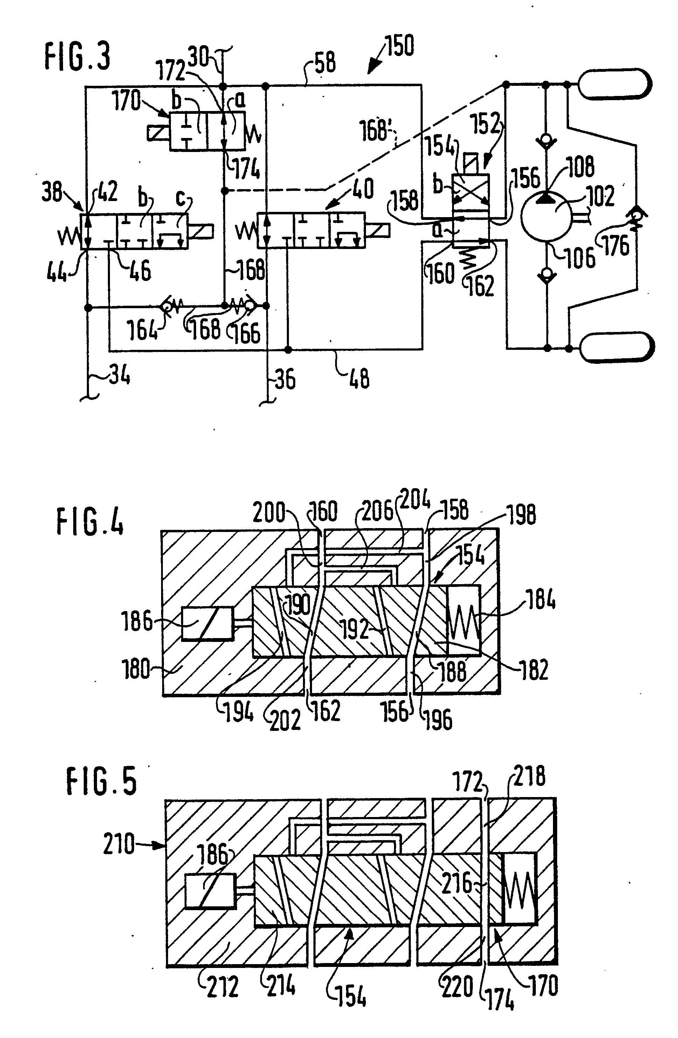

Ausführungsbeispiele der Erfindung sind in der Zeichnung schematisch dargestellt und in der nachfolgenden Beschreibung näher erläutert. Es zeigen Figur 1 ein angetriebenes Radpaar mit einer Vorrichtung zur Vermeidung des Radblockierens beim Bremsen und zur Begrenzung von Antriebsschlupf, welche eine in zwei Richtungen fördernde Druckmittelpumpe hat, als erstes Ausführungsbeispiel, Figur 2 eine derartige Vorrichtung, jedoch mit einer nur in einer Richtung fördernden Pumpe, der eine Umschaltventilanordnung zugeordnet ist, als zweites Ausführungsbeispiel, Figur 3 einen Ausschnitt des Schaltplans nach Figur 2 mit einer davon abweichend gestalteten Umschaltventilanordnung sowie mit gesteuerten Rückschlagventilen als drittes Ausführungsbeispiel, Figur 4 eine schematische Darstellung der Umschaltventilanordnung nach Figur 3 in Längsschieberbauart und Figur 5 eine mit einem weiteren Ventil ergänzte Umschaltventilanordnung nach Figur 4 in entsprechender Darstellung.

Beschreibung der Ausführungsbeispiele

Beim ersten Ausführungsbeispiel nach Figur 1 weist eine mit 10 bezeichnete Antriebsachse eines im übrigen nicht dargestellten Fahrzeugs zwei über ein Differentialgetriebe 12 antreibbare Räder 14 und 16 auf, denen je eine Radbremse 18 und 20 zugeordnet ist. Das Fahrzeug ist mit einer Vorrichtung 22 zur Vermeidung des Radblockierens beim Bremsen und zur Begrenzung von Antriebsschlupf an den Rädern 14 und 16 ausgestattet. Bei dieser Vorrichtung 22 ist ein mit einem Druckmittelvorratsbehälter 24 ausgestatteter Hauptbremszylinder 26 mit einem Bremspedal 28 betätigbar. An den Hauptbremszylinder 26 ist mit einer Hauptbremsleitung 30 ein Bremskreis I zur Betätigung der Radbremsen 18 und 20 angeschlossen. Außerdem ist der Hauptbremszylinder 26 mit einer zweiten Hauptbremsleitung 32 für einen nicht dargestellten, Radbremsen einer weiteren Fahrzeugachse enthaltenden Bremskreis II verbunden.

Die Hauptbremsleitung 30 ist zur Bildung eines Regelkanales L für das linke Rad 14 der Antriebsachse 10 in eine Radbremsleitung 34 und zur Bildung eines Regelkanales R für die Radbremse 20 des rechten Rades 16 in eine Radbremsleitung 36 verzweigt. Zwischen dem Hauptbremszylinder 26 und der Radbremse 18 ist in der Radbremsleitung 34 eine Drucksteuerventilanordnung 38 in Form eines 3/3-Wegeventils angeordnet. Eine entsprechende, identische Drucksteuerventilanordnung 40 ist mit der Radbremsleitung 36 des Regelkanals R verbunden.

Das Wegeventil der Drucksteuerventilanordnung 38 hat drei Anschlüsse: Ein erster Anschluß 42 ist mit dem Hauptbremszylinder 26, ein zweiter Anschluß 44 mit der Radbremse 18 im Regelkanal L verbunden, während ein dritter Anschluß 46 mit einer Pumpenanschlußleitung 48 in Verbindung steht. Das Wegeventil der Drucksteuerventilanordnung 38 kann drei Schaltstellungen einnehmen: In der federbetätigten Grundstellung a ist das Ventil zwischen den Anschlüssen 42 und 44 durchgängig, während der Anschluß 46 gesperrt ist. In der elektromagnetisch geschalteten Stellung b sind alle drei Anschlüsse 42, 44 und 46 gesperrt. In der gleichfalls elektromagnetisch betätigten Stellung c des Ventils besteht zwischen den Anschlüssen 44 und 46 Durchgang, während der Anschluß 42 gesperrt ist. In entsprechender Weise ist die Drucksteuerventilanordnung 40 geschaltet, lediglich mit dem Unterschied, daß der zweite Anschluß 44 des Ventils mit der Radbremse 20 im Regelkanal R verbunden ist.

Die Vorrichtung 22 weist außerdem eine selbstansaugende Pumpe 52 mit einem elektrischen Antriebsmotor 54 auf. Durch Drehrichtungsumschaltung des Antriebsmotors 54 (ausgezogen gezeichneter Doppelpfeil) ist die als Zahnradpumpe ausgebildete Pumpe 52 in zwei Förderrichtungen umschaltbar. Abweichend hiervon kann die Pumpe 52 nach Figur 1 mit drehrichtungskonstantem Antrieb (gestrichelt gezeichneter Pfeil) versehen sein und zwei durch pumpeninterne Ventile gesteuert umschaltbare Förderrichtungen aufweisen. Die Pumpe 52 ist mit ihrem einen Anschluß 56 mit einer Pumpenleitung 58 verbunden, welche hauptbremszylinderseitig an die Radbremsleitung 36 angeschlossen ist. Der andere Anschluß 60 der Pumpe 52 steht mit der erwähnten Pumpenleitung 48 in Verbindung. An die Leitung 48 ist ferner ein Druckmittelspeicher 62, an die Leitung 58 ein Dämpfer 64 angeschlossen.

Die Vorrichtung 22 ist ferner mit einem elektronischen Steuergerät 66 ausgestattet. An das Steuergerät 66 ist eine Leitung 68 mit einem Kennungsschalter 70 angeschlossen, welcher mit dem Bremspedal 28 zusammenwirkt. Weitere Leitungen 72 und 74 des Steuergeräts 66 führen zu Drehzahlfühlern 76 und 78, mit denen das Drehverhalten der Räder 14 und 16 erfaßbar ist. An das Steuergerät 66 ist außerdem eine Leitung 80 zum Schalten des Antriebsmotors 54 der Pumpe 52 angeschlossen. Ferner führen Leitungen 82 und 84 zu Betätigungsmagneten 86 und 88 der beiden Drucksteuerventilanordnungen 38 und 40.

Die Vorrichtung 22 hat folgende Wirkungsweise:

In der gezeichneten Stellung a der Drucksteuerventilanordnung 38 wird durch Betätigen des Bremspedals 28 vom Hauptbremszylinder 26 ausgehend über die Hauptbremsleitung 30 und die Radbremsleitung 34 in der Radbremse 18 des Rades 14 Bremsdruck erzeugt. In entsprechender Weise wird Bremsdruck in der Radbremse 20 des Rades 16 wirksam.

Bei einer Bremsregelung zur Vermeidung des Blockierens, z. B. des Rades 14, beim Bremsen wird in dieser Stellung a der Drucksteuerventilanordnung 38 ebenfalls Bremsdruck aus dem Hauptbremszylinder 26 in die Radbremse 18 übertragen. In der Stellung b wird dagegen der Durchgang vom Hauptbremszylinder 26 zur Radbremse 18 unterbrochen, so daß der Bremsdruck am Rad 14 konstant bleibt. In der Stellung c wird die Radbremse 18 mit der Leitung 48 verbunden, so daß der Bremsdruck in der Radbremse sinkt.

Im Blockierschutzbetrieb wird das Drehverhalten beispielsweise des Rades 14 mit dem Drehzahlfühler 76 erfaßt und vom elektronischen Steuergerät 66 ausgewertet. Bei drohendem Radblockieren schaltet das Steuergerät 66 die Drucksteuerventilanordnung 38 in ihre Stellung c, so daß zum Bremsdruckabbau Druckmittel aus der Radbremse 18 über die Leitungen 34 und 48 zum Druckmittelspeicher 62 fließt. Gleichzeitig schaltet das Steuergerät 66 den Antriebsmotor 54 der Pumpe 52 ein, so daß diese das aus der Radbremse 18 entnommene Druckmittel über die Leitung 58 und die Hauptbremsleitung 30 zum Hauptbremszylinder 26 fördert.

Im Verlauf der Bremsregelung im Blockierschutzbetrieb wird in der vom Steuergerät 66 geschalteten Stellung a der Drucksteuerventilanordnung 38 Druckmittel aus dem Speicher 62 entnommen und von der Pumpe 52 durch die Leitung 58 und die Radbremsleitung 34 zum Bremsdruckaufbau zur Radbremse 18 gefördert.

Beim Betrieb der Vorrichtung 22 zur Begrenzung von Antriebsschlupf, beispielsweise des Rades 14, wird die Stellung des (unbetätigten) Bremspedals 28 mittels des Schalters 70 erfaßt und der Antriebsmotor 54 der Pumpe 52 in umgekehrter Drehrichtung als beim Blockierschutzbetrieb eingeschaltet. Außerdem wird vom Steuergerät 66 die Drucksteuerventilanordnung 38 in ihre Stellung c gebracht. In diesem Betriebszustand saugt die Pumpe Druckmittel aus dem Vorratsbehälter 24 durch den Hauptbremszylinder 26 und durch die Leitungen 30 sowie 58 an und drückt es durch die Leitungen 48 und 34 in die Radbremse 18. Hierbei strömt das Druckmittel in den dritten Anschluß 46 der Drucksteuerventilanordnung 38 ein und durch den zweiten Anschluß 44 zur Radbremse 18. Durch entsprechende Steuerung der Drucksteuerventilanordnung 38 mittels des Steuergeräts 66 wird dabei der Bremsdruck in der Radbremse 18 in einer Höhe wirksam, welche das Rad 14 am Auftreten unzulässig großen Schlupfes hindert.

Zum Aufheben dieses Antriebsschlupfbegrenzungsbetriebs schaltet das Steuergerät 66 die Drucksteuerventilanordnung 38 in die Stellung a. Gleichzeitig wird der Antriebsmotor 54 der Pumpe 52 vom Steuergerät 66 abgeschaltet. Das Druckmittel kann dadurch aus der Radbremse 18 durch die Leitungen 34 und 30 zum Vorratsbehälter 24 des Hauptbremszylinders 26 zurückströmen.

Bei den folgenden Ausführungsbeispielen sind für identische Bauteile und Baugruppen gleiche Bezugszahlen verwendet.

Beim in Figur 2 dargestellten zweiten Ausführungsbeispiel unterscheidet sich die Vorrichtung 100 zur Vermeidung des Radblockierens beim Bremsen sowie zur Begrenzung von Antriebsschlupf an den antreibbaren Rädern 14 und 16 der Antriebsachse 10 im wesentlichen vom Beispiel nach Figur 1 dadurch, daß eine Pumpe 102 mit nur einer Förderrichtung sowie eine der Pumpe zugeordnete Umschaltventilanordnung 104 vorgesehen sind. Die beispielsweise dem Stand der Technik entnehmbare Pumpe 102 ist mit ihrem Druckmitteleingang 106 an die Pumpenleitung 48 angeschlossen. Der Druckmittelausgang 108 der Pumpe 102 ist mit der Pumpenleitung 58 verbunden. Je ein Rückschlagventil 110 und 112 befindet sich in der Leitung 48 vor dem Pumpeneingang 106 bzw. nach dem Pumpenausgang 108 in der Leitung 58.

Die Umschaltventilanordnung 104 besteht aus je einem eingangsseitig der Pumpe 102 in der Leitung 48 sowie ausgangsseitig der Pumpe in der Leitung 58 angeordneten 3/2-Wegeventil 114 und 116. Das Wegeventil 114 hat drei Anschlüsse: einen ersten mit dem Pumpeneingang 106 verbundenen Anschluß 118, einem zweiten mit der Pumpenleitung 48 verbundenen Anschluß 120 und einen dritten Anschluß 122, von dem eine Umschaltleitung 124 zur Pumpenleitung 58 führt. In der federbetätigten Grundstellung a des Ventils 114 besteht zwischen dem zweiten Anschluß 120 und ersten Anschluß 118 Durchgang, während der dritte Anschluß gesperrt ist. In seiner elektromagnetbetätigten Stellung b ist zwischen dem dritten Anschluß 122 und dem ersten Anschluß 118 Durchgang vorhanden. Der zweite Anschluß 120 ist gesperrt.

Das ausgangsseitig der Pumpe 102 angeordnete Wegeventil 116 der Umschaltventilanordnung 104 hat ebenfalls drei Anschlüsse. Der erste Anschluß 126 ist mit dem Pumpenausgang 108, der zweite Anschluß 128 mit der Pumpenleitung 58 und der dritte Anschluß 130 mit einer zur Pumpenleitung 48 führenden Umschaltleitung 132 verbunden. In der federbetätigen Grundstellung a des Ventils 116 ist Durchgang zwischen dem ersten Anschluß 126 und dem zweiten Anschluß 128 geschaltet. Der dritte Anschluß 130 ist gesperrt. In der elektromagnetbetätigten Stellung b des Ventils 116 ist der zweite Anschluß 128 gesperrt, während zwischen dem ersten Anschluß 126 und dem dritten Anschluß 130 auf Durchgang geschaltet ist.

Im übrigen ist die Vorrichtung 100 identisch zu derjenigen nach Figur 1 ausgestattet. Sie hat daher auch ein nicht dargestelltes elektronisches Steuergerät, an welches die Betätigungsmagnete 134 und 136 der beiden Ventile 114 und 116 mit Leitungen 138 und 140 angeschlossen sind.

Die Drucksteuerventilanordnungen 38, 40 der Vorrichtung 100 arbeiten in gleicher Weise wie beim ersten Ausführungsbeispiel.

Im Blockierschutzbetrieb, bei dem Blockiergefahr, beispielsweise des Rades 14, besteht und die Drucksteuerventilanordnung 38 in die Ventilstellung c geschaltet ist, fördert die Pumpe 102 zum Druckabbau in der Radbremse 18 Druckmittel zum dritten Anschluß 46 der Drucksteuerventilanordnung 38 durch die Leitung 48 und bei in ihrer Grundstellung a befindlichen Wegeventilen 114 und 116 der Umschaltventilanordnung 104 durch die Leitung 58 zum Hauptbremszylinder 26. Zum Druckaufbau in der Radbremse 18 nimmt die Drucksteuerventilanordnung 38 die Grundstellung a ein. In diesem Betriebszustand fördert die Pumpe 102 Druckmittel aus dem Speicher 62 durch die Leitung 58 und die Radbremsleitung 34 zur Radbremse 18.

Im Antriebsschlupfbegrenzungsbetrieb, in dem beispielsweise das Rad 14 am Durchdrehen gehindert werden soll, nimmt aufgrund der Ansteuerung durch das nicht dargestellte Steuergerät der Vorrichtung 100 die Drucksteuerventilanordnung 38 die Stellung c ein, während die Ventile 114 und 116 der Umschaltventilanordnung 104 in ihre Stellung b geschaltet sind. Zum Druckaufbau in der Radbremse 18 entnimmt die Pumpe 102 über den dritten, mit der Leitung 124 und der Leitung 58 mit dem Hauptbremszylinder 26 verbundenen Anschluß 122 aus dem Vorratsbehälter 24 Druckmittel. Die Pumpe 102 fördert das Druckmittel über den ersten Anschluß 126 des Wegeventils 116 zu dessen drittem Anschluß 130, der über die Umschaltleitung 132 mit der Leitung 48 in Verbindung steht, welche an den dritten Anschluß 46 der Drucksteuerventilanordnung 38 angeschlossen ist. Zum Druckabbau in der Radbremse 18 wird die Drucksteuerventilanordnung 38 in ihre Grundstellung a geschaltet: Das Druckmittel kann durch die Radbremsleitung 34 und die Hauptbremsleitung 30 zurück zum Druckmittelvorratsbehälter 24 des Hauptbremszylinders 26 fließen.

Die in Figur 3 als drittes Ausführungsbeispiel ausschnittsweise wiedergegebene Vorrichtung 150 zur Vermeidung des Radblockierens beim Bremsen und zur Begrenzung von Antriebsschlupf unterscheidet sich von der vorbeschriebenen Ausführungsform nach Figur 2 im wesentlichen dadurch, daß die Umschaltventilanordnung 104 einschließlich der Umschaltleitungen 124 und 132 durch eine Anordnung 152 ersetzt ist, welche aus einem 4/2-Wegeventil 154 besteht. Dieses Ventil hat vier Anschlüsse: Der erste Anschluß 156 ist mit dem Pumpenausgang 108, der zweite Anschluß 158 über die Pumpenleitung 58 und die Hauptbremsleitung 30 mit dem in der Figur nicht sichtbaren Hauptbremszylinder, der dritte Anschluß 160 über die Leitung 48 mit dem dritten Anschluß 46 der beiden Drucksteuerventilanordnungen 38 und 40 und der vierte Anschluß 162 mit dem Pumpeneingang 106 verbunden. Das Wegeventil 154 hat eine federbetätigte Ruhestellung a, in der zwischen dem ersten Anschluß 156 und dem zweiten Anschluß 158 sowie zwischen dem dritten Anschluß 160 und dem vierten Anschluß 162 Durchgang besteht. Bei einer zweiten, vom nicht dargestellten Steuergerät der Vorrichtung 150 geschalteten Stellung b des Wegeventils 154 ist Durchgang zwischen dem ersten Anschluß 156 und dem dritten Anschluß 160 sowie zwischen dem zweiten Anschluß 158 und dem vierten Anschluß 162 gegeben. Die Druckmittelförderung durch die Pumpe 102 erfolgt im Blockierschutzbetrieb sowie im Antriebsschlupfbegrenzungsbetrieb in gleicher Weise wie beim Ausführungsbeispiel nach Figur 2.

Zur Erhöhung der Funktionssicherheit der Vorrichtung 150 ist es vorteilhaft, den Drucksteuerventilanordnungen 38 und 40 ein Rückschlagventil 164 und 166 zwischen dessen jeweils erstem Anschluß 42 und zweitem Anschluß 44 zuzuordnen. Die Rückschlagventile 164 und 166 liegen daher in einer einerseits an die jeweilige Radbremsleitung 34 bzw. 36 und andererseits an die Hauptbremsleitung 30 angeschlossenen Rückführleitung 168. Die Rückschlagventile 164 und 166 entfalten Sperrwirkung vom Hauptbremszylinder 26 zur jeweiligen Radbremse 18 bzw. 20 und ermöglichen beim Hängenbleiben der Drucksteuerventilanordnungen 38, 40, insbesondere in deren Stellungen b, das Entbremsen beim Loslassen des Bremspedals 28.

Im Antriebsschlupfbegrenzungsbetrieb sind die Drucksteuerventilanordnungen 38 und/oder 40 in ihre Stellung c und die Umschaltventilanordnung 152 in ihre Stellung b schaltbar. Damit beim Druckaufbau das Druckmittel nicht vom zweiten Anschluß 44 der Drucksteuerventilanordnungen 38 bzw. 40 durch die Rückführleitung 168 und die Rückschlagventile 164 bzw. 166 zum Hauptbremszylinder 26 bzw. durch die Leitung 58 zurück zur Pumpe 102 entweicht, ist in der Rückführleitung 168 ein 2/2-Wegeventil 170 in Reihe zu den Rückschlagventilen 164 und 166 geschaltet. Dieses Ventil 170 hat einen ersten Anschluß 172, der mit der Hauptbremsleitung 30 in Verbindung steht, während ein zweiter Anschluß 174 mit den Rückschlagventilen 164 und 166 verbunden ist. In einer ersten Schaltstellung a des Ventils 170 sind die Anschlüsse 172 und 174 durchgeschaltet. In der zweiten, vom nicht dargestellten Steuergerät der Vorrichtung 150 elektromagnetbetätigt schaltbaren Stellung b sind dagegen die Anschlüsse 172 und 174 gesperrt. Zum Zwecke des schnellen Druckabbaus im normalen Bremsbetrieb nimmt das Wegeventil 170 die Grundstellung a ein, beim Antriebsschlupfbegrenzungsbetrieb ist dagegen das Wegeventil 170 in seine Stellung b geschaltet. Im übrigen ist die Vorrichtung 150 in gleicher Weise ausgestattet wie in den vorangehend beschriebenen beiden Ausführungsbeispielen.

Das Wegeventil 170 kann jedoch entfallen, wenn die Rückführleitung 168 nicht an die Hauptbremsleitung 30, sondern zwischen dem Pumpenausgang 108 der Pumpe 102 und dem Wegeventil 154 angeschlossen ist (in Figur 2 gestrichelt eingezeichnete Leitung 168).

Bei einer ihren Druck nicht selbstbegrenzenden Ausführung der Pumpe 102 ist zusätzlich ein parallel zu dieser geschaltetes Druckbegrenzungsventil 176 erforderlich, welches bei Schaltstellungen der Drucksteuerventilanordnungen 38, 40, in denen ein Druckmittelabfluß von der Pumpe unterbunden ist, ein Ansteigen des Druckes über einen maximal zulässigen Wert verhindert.

In Figur 4 ist ein Ausführungsbeispiel für das 4/2-Wegeventil 154 der Umschaltventilanordnung 152 des Ausführungsbeispiels nach Figur 3 dargestellt. Das Ventil hat ein Gehäuse 180 mit einem längsbeweglich geführten Schieber 182. Der Längsschieber 182 ist mit einer Rückholfeder 184 in seine dargestellte Stellung a bewegbar. Ein Elektromagnet 186 dient der Bewegung des Längsschiebers 182 in seine Stellung b. Der Längsschieber 182 ist mit vier Steuerkanälen 188, 190, 192 und 194 versehen. Das Ventilgehäuse 180 weist vier Anschlüsse 156, 158, 160 und 162 sowie zugeordnete Anschlußkanäle 196, 198, 200 und 202 auf. In der gezeichneten Stellung a der Ventilanordnung 152 sind der erste Anschluß 156 und der zweite Anschluß 158 durch die beiden Anschlußkanäle 196 und 198 des Ventilgehäuses 180 sowie den Steuerkanal 188 im Längsschieber 182 verbunden. In entsprechender Weise ist zwischen dem dritten Anschluß 160 und dem vierten Anschluß 162 durch den Steuerkanal 190 und die Anschlußkanäle 200 und 202 Durchgang gegeben. Außerdem weist das Ventilgehäuse 180 seitens des zweiten Anschlusses 158 und des dritten Anschlusses 160 Gehäusekanäle 204 und 206 auf, von denen der Kanal 204 mit dem Anschlußkanal 198 und der Kanal 206 mit dem Anschlußkanal 200 in Verbindung steht. In der elektromagnetbetätigten Stellung b des 4/2-Wegeventils 154 ist deshalb der erste Anschluß 156 über den Anschlußkanal 196, den Steuerkanal 192, den Gehäusekanal 206 und den Anschlußkanal 200 mit dem dritten Anschluß 160 verbunden. In entsprechender Weise ist Verbindung zwischen dem zweiten Anschluß 158 und dem vierten Anschluß 162 über den Anschlußkanal 198, den Gehäusekanal 204, den Steuerkanal 194 und den Anschlußkanal 202 gegeben.

Beim in Figur 5 dargestellten Ausführungsbeispiel einer Umschaltventilanordnung 210 ist das 4/2-Wegeventil 154 der Umschaltventilanordnung 152 des Ausführungsbeispieles nach Figur 3 mit dem in Reihe zu den Rückschlagventilen 164 und 166 geschalteten 2/2-Wegeventil 170 gleichfalls in einem Ventilgehäuse 212 mit einem Längsschieber 214 vereinigt. Das 4/2-Wegeventil 154 ist dabei in identischer Weise zum Ausführungsbeispiel nach Figur 4 verwirklicht. Zur Darstellung des 2/2-Wegeventils 170 ist der mit einem Elektromagneten 186 betätigbare Längsschieber 214 verlängert und mit einem zusätzlichen Steuerkanal 216 versehen. Außerdem hat das Ventilgehäuse 212 zusätzlich zwei Anschlußkanäle 218 und 220, von denen der Anschlußkanal 218 mit dem ersten Anschluß 172 und der Anschlußkanal 220 mit dem zweiten Anschluß 174 das Wegeventil 170 in Verbindung steht. In der gezeichneten Grundstellung a des 4/2-Wegeventils 154 nimmt auch das 2/2-Wegeventil 170 seine Grundstellung a ein, in welcher der erste Anschluß 172 über den Anschlußkanal 218, den Steuerkanal 216 und den Anschlußkanal 220 mit dem zweiten Anschluß 174 verbunden ist. In der Stellung b des 4/2-Wegeventils 154 nimmt auch das Wegeventil 170 seine Stellung b ein, in welcher der Durchgang zwischen den Anschlüssen 172 und 174 gesperrt ist.

## Ansprüche

1. Vorrichtung (22) zur Vermeidung des Radblockierens beim Bremsen und zur Begrenzung von Antriebsschlupf an den antreibbaren Rädern (14, 16) eines Fahrzeugs, mit einem wenigstens einkreisigen Hauptbremszylinder (26) mit einem Druckmittelvorratsbehälter (24), mit einer zwischen dem Hauptbremszylinder (26) und einer Radbremse (18) eines antreibbaren Rades (14) angeordneten Drucksteuerventilanordnung (38) und mit einer Pumpe (52), die im Blockierschutzbetrieb mittels der Drucksteuerventilanordnung (38) aus einer Radbremse (18) entnommenes Druckmittel zum Hauptbremszylinder (26) fördert und im Antriebsschlupfbegrenzungsbetrieb Druckmittel aus dem Hauptbremszylinder (26) entnimmt und zu wenigstens einer Radbremse (18) drückt, wobei die Drucksteuerventilanordnung (38) einen ersten mit dem Hauptbremszylinder (26) verbundenen Anschluß (42), einen zweiten mit der Radbremse (18) verbundenen Anschluß (44) und einen dritten Anschluß (46) hat, durch den im Blockierschutzbetrieb zur Radbremsdruckabsenkung Druckmittelmengen ausströmen, dadurch gekennzeichnet, daß im Antriebsschlupfbegrenzungsbetrieb der dritte Anschluß (46) der Drucksteuerventilanordnung (38) mit einem Druckausgang (Anschluß 60) der Pumpe (52) verbunden ist.

2. Vorrichtung nach Anspruch 1, dadurch gekennzeichnet, daß die Pumpe (52) als eine in zwei Förderrichtungen umschaltbare Pumpe mit einem drehrichtungsumschaltbaren Antrieb (54) ausgebildet ist.

3. Vorrichtung nach Anspruch 2, dadurch gekennzeichnet daß die Pumpe (52) eine Zahnradpumpe ist.

4. Vorrichtung nach Anspruch 1, dadurch gekennzeichnet, daß die Pumpe (52) einen drehrichtungskonstanten Antrieb (54) und zwei ventilgesteuert umschaltbare Förderrichtungen hat.

5. Vorrichtung nach Anspruch 1, dadurch gekennzeichnet, daß die Pumpe (102) einen Druckmitteleingang (106) sowie einen Druckmittelausgang (108) hat und daß eine Umschaltventilanordnung (104; 152) vorgesehen ist, die im Blockierschutzbetrieb den Druckmittelausgang (108) der Pumpe (102) mit dem Hauptbremszylinder (26) und den Druckmitteleingang (106) mit dem dritten Anschluß (46) der wenigstens einen Drucksteuerventilanordnung (38) verbindet, während im Antriebsschlupfbegrenzungsbetrieb der Druckmitteleingang (106) der Pumpe (102) mit dem Hauptbremszylinder (26) und der Druckmittelausgang (108) mit dem dritten Anschluß (46) der Drucksteuerventilanordnung (38) verbunden ist.

6. Vorrichtung nach Anspruch 5, dadurch gekennzeichnet, daß die Umschaltventilanordnung (104) aus einem eingangsseitig und einem ausgangsseitig der Pumpe (102) angeordneten 3/2-wegeventil (114, 116) besteht, wobei das eingangsseitige Ventil (114) einen ersten mit der Pumpe (102) verbundenen Anschluß (118), einen zweiten mit dem dritten Anschluß (46) der Drucksteuerventilanordnung (38) verbundenen Anschluß (120) und einen dritten mit dem Hauptbremszylinder (26) verbundenen Anschluß (122) hat, während das ausgangsseitige Ventil (116) mit einem ersten mit der Pumpe (102) verbundenen Anschluß (126), einem zweiten mit dem Hauptbremszylinder (26) verbundenen Anschluß (128) und einem dritten mit dem dritten Anschluß (46) der Drucksteuerventilanordnung (38) verbundenen Anschluß (130) versehen ist.

7. Vorrichtung nach Anspruch 5, dadurch gekennzeichnet, daß die Umschaltventilanordnung (152) aus einem 4/2-Wegeventil (154) besteht, dessen erster Anschluß (156) mit dem Ausgang (108) der Pumpe (102), dessen zweiter Anschluß (158) mit dem Hauptbremszylinder (26), dessen dritter Anschluß (160) mit dem dritten Anschluß (46) der Drucksteuerventilanordnung (38) und dessen vierter Anschluß (162) mit dem Pumpeneingang (106) verbunden ist, wobei die Umschaltventilanordnung (152) in ihrer einen Stellung den Pumpenausgang (108) mit dem Hauptbremszylinder (26) sowie den dritten Anschluß (46) der Drucksteuerventilnung (38) mit dem Pumpeneingang (106) und in ihrer anderen Stellung den pumpenausgang (108) mit dem dritten Anschluß (46) der Drucksteuerventilanordnung (38) sowie den Hauptbremszylinder (26) mit dem Pumpeneingang (106) verbindet.

8. Vorrichtung nach einem der Ansprüche 6 oder 7, mit einem parallel zur Drucksteuerventilanordnung (38) zwischen dessen erstem und zweitem Anschluß (42, 44) angeordneten Rückschlagventil (164) mit Sperrwirkung vom Hauptbremszylinder (26) zur Radbremse (18), dadurch gekennzeichnet, daß ein 2/2-Wegeventil (170) in Reihe zum Rückschlagventil (164) geschaltet ist.

9. Vorrichtung nach Anspruch 5 oder 7, mit einem Rückschlagventil (164) zum Entbremsen der Radbremse (18), welches in einer an die Radbremsleitung (34) zwischen der Drucksteuerventilanordnung (38) und der Radbremse (18) angeschlossenen Rückführleitung (168) liegt, dadurch gekennzeichnet, daß die Rückführleitung (168') zwischen dem 4/2-Wegeventil (154) und dem Pumpenausgang (108) angeschlossen ist.

10. Vorrichtung nach einem der Ansprüche 1 bis 7, dadurch gekennzeichnet, daß bei einer ihren Druck nicht selbst begrenzenden Pumpe (102) ein Druckbegrenzungsventil (176) zwischen den Pumpeneingang (106) und den Pumpenausgang (108) geschaltet ist.

11. Vorrichtung nach Anspruch 7, dadurch gekennzeichnet, daß das Wegeventil (154) der Umschaltventilanordnung (152) in Längsschieberbauart ausgebildet ist.

12. Vorrichtung nach Anspruch 8 und 11, dadurch gekennzeichnet, daß das zum Rückschlagventil (164) in Reihe geschaltete 2/2-Wegeventil (170) mit der Umschaltventilanordnung (152) zu einer Ventilanordnung (212, 214) in Längsschieberbauart mit einem Elektromagnet (186) vereinigt ist.

FIG.1

FIG. 2

FIG.3

FIG.4

FIG.5

**Europäisches Patentamt**

# EUROPÄISCHER RECHERCHENBERICHT

Nummer der Anmeldung

EP    90 10 2932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A, D | DE-A-3215739 (ROBERT BOSCH) <br> * Seite 5, Absatz 2 - Seite 6, Absatz 1; Figur 1 * <br> --- | 1 | B60T8/48 <br> B60T8/42 <br> B60T8/40 |
| A | EP-A-265885 (SUMITOMO) <br> * Spalte 10, Zeile 36 - Spalte 11, Zeile 57; Figur 8 * <br> --- | 1 | |
| A | GB-A-2165905 (ALFRED TEVES) <br> * Anspruch 1; Figuren 1, 2 * <br> --- | 1 | |
| A | PATENT ABSTRACTS OF JAPAN <br> vol. 10, no. 174 (M-490)(2230) 19 Juni 1986, <br> & JP-A-61 24654 (HONDA) 03 Februar 1986, <br> * das ganze Dokument * <br> --- | 4-6 | |
| A | GB-A-2139722 (ALFRED TEVES) <br> * Figur 3 * <br> --- | 4, 5, 7 | |
| P,A | GB-A-2216967 (ALFRED TEVES) <br> * Ansprüche 1-4; Figur * <br> --- | 1, 2 | **RECHERCHIERTE SACHGEBIETE (Int. Cl.5 )** |
| P,A | DE-A-3903532 (VOLKSWAGEN) <br> * Spalte 3, Zeile 9 - Spalte 4, Zeile 2; Figur * <br> ----- | 1-3 | B60T |

Der vorliegende Recherchenbericht wurde für alle Patentansprüche erstellt

| Recherchenort | Abschlußdatum der Recherche | Prüfer |
|---|---|---|
| DEN HAAG | 05 JUNI 1990 | MEIJS P. |